# EUROPÄISCHE PATENTANMELDUNG

(11) **EP 2 375 180 A2**
(43) Veröffentlichungstag der Anmeldung: **12.10.2011**
(21) Anmeldenummer: 11160238.9
(22) Anmeldetag: 29.03.2011
(51) Int. Cl.: F24F 12/00, F24F 13/18, E06B 7/02

(54) **Entfeuchtungsvorrichtung**

(30) Priorität: 29.03.2010 DE 102010016194
(71) Anmelder: Bavaria Fensterbau GmbH, 84036 Landshut / Ergolding (DE)
(72) Erfinder: Stillger, Christoph, 84036 Landshut (DE)
(74) Vertreter: Harrasz, Julia Konstanze

(57) **Zusammenfassung**

Eine Entfeuchtungsvorrichtung zur Verringerung des Feuchtigkeitsgehalts der Luft in einem Raum zur Verwendung mit einem Fenster, mit einem Luftführungselement, wobei das Luftführungselement mindestens eine Außenluft- und eine Abluftstelle und mindestens ein Luftbewegungselement umfasst, wobei ein Luftbewegungselement der Außenluftstelle und/oder ein Luftbewegungselement der Abluftstelle zugeordnet ist und wobei den Luftbewegungselementen jeweils ein Anströmelement zugeordnet ist, mittels dessen die Luft dem Luftbewegungselement zuführbar ist, ist im Hinblick auf eine besonders einfache Nachrüstbarkeit derart ausgestaltet, dass das Luftführungselement in eine Fensterbank integrierbar ist und dass die Fensterbank zumindest eine Außenluft- und eine Abluftstelle aufweist, die mit der Außenluft- und der Abluftstelle des Luftführungselements im Betrieb in Strömungsverbindung ist. Ferner ist entsprechendes Fenstersystem gezeigt.

## Beschreibung

Die Erfindung betrifft eine Entfeuchtungsvorrichtung zur Verringerung des Feuchtigkeitsgehalts der Luft in einem Raum zur Verwendung mit einem Fenster, mit einem Luftführungselement, wobei das Luftführungselement mindestens eine Außenluft- und eine Abluftstelle und mindestens ein Luftbewegungselement umfasst, wobei ein Luftbewegungselement der Außenluftstelle und/oder ein Luftbewegungselement der Abluftstelle zugeordnet ist und wobei den Luftbewegungselementen jeweils ein Anströmelement zugeordnet ist, mittels dessen die Luft dem Luftbewegungselement zuführbar ist. Des Weiteren betrifft die Erfindung ein entsprechendes Fenstersystem.

Eine ausreichende Belüftung von Räumen ist neben einer erhöhten Wohnqualität notwendig, um die Substanzbeeinträchtigung von Räumen, beispielsweise durch Schimmelbildung, zu verhindern. In einer normalen Wohnsituation erfolgt der Luftaustausch durch das sogenannte Stoßlüften, das durch den Bewohner mehr oder weniger regelmäßig vorgenommen wird. Die Qualität des Stoßlüftens hängt hierbei entscheidend vom Nutzungsverhalten der Räume durch den Bewohner ab, beispielsweise verhindert eine arbeitsbedingte Abwesenheit eine regelmäßige, gleichmäßig über den Tag verteilte Belüftung der Räume.

Um eine hinreichende Belüftung von Räumen zu gewährleisten sind aktive und automatisch arbeitende Belüftungssysteme bekannt. Je nach Funktions- und Bauart des Belüftungssystems sind besondere bauliche Vorkehrungen wie zum Beispiel Mauerdurchbrüche an Außenfassaden und die entsprechende Anbringung des Belüftungssystems zu treffen. Solche Vorkehrungen sind jedoch teils aufgrund von baulichen Gegebenheiten nicht umsetzbar, teils genügen sie auch nicht ästhetischen Anforderungen an die Räume oder Gebäudeaußenfassaden.

Um derartige Schwierigkeiten zu umgehen, sind Belüftungssysteme bekannt, die am Fenster angeordnet sind. Beispielsweise ist ein modular aufgebautes Belüftungssystem "AEROMAT^{®}" bekannt, das zwischen Rahmen und Fensterscheibe montierbar ist. Des Weiteren ist ein Belüf tungssystem "VentoTherm^{®}" bekannt, das im oberen Blendrahmen des Fensters integriert ist und für dessen Einbau eine Fensterlaibung erforderlich ist.

Der vorliegenden Erfindung liegt die Aufgabe zugrunde, eine Vorrichtung zum Luftaustausch der eingangs genannten Art anzugeben, dass eine vereinfache Nachrüstbarkeit ermöglicht ist.

Erfindungsgemäß wird die voranstehende Aufgabe durch eine Entfeuchtungsvorrichtung mit den Merkmalen des Patentanspruchs 1 gelöst. Danach ist die in Rede stehende Entfeuchtungsvorrichtung derart ausgestaltet und weitergebildet, dass das Luftführungselement in eine Fensterbank integrierbar ist und dass die Fensterbank zumindest eine Außenluft- und eine Abluftstelle aufweist, die mit der Außenluft- und der Abluftstelle des Luftführungselements im Betrieb in Strömungsverbindung ist. Des Weiteren wird die Aufgabe durch ein entsprechendes Fenstersystem mit den Merkmalen des Patentanspruchs 8 gelöst.

Erfindungsgemäß ist erkannt worden, dass man in Abkehr zu dem im Stand der Technik bekannten Entfeuchtungsvorrichtungen eine einfache Nachrüstbarkeit dadurch erreicht, dass die Entfeuchtungsvorrichtung in eine Fensterbank integrierbar ist und eine Strömungsverbindung zwischen der Entfeuchtungsvorrichtung, der Fensterbank und der Umgebung existiert über die ein Luftaustausch zwischen einem Raum und der Umwelt erfolgen kann und somit feuchte Luft aus dem Raum transportiert und durch weniger feuchte Luft ersetzt werden kann. Ein Einbau in eine Fensterbank erlaubt es, eine durchgehende Entfeuchtung auch für solche Räume zu gewährleisten, die beispielsweise aufgrund von vorliegenden baulichen Gegebenheiten oder anderen Gründen nicht mit herkömmlichen Entlüftungsvorrichtungen ausgestattet werden können, da diese eine zu große Bauhöhe aufweisen. Eine in die Fensterbank integrierte Entfeuchtungsvorrichtung würde gewährleisten, dass diese nicht von außen sichtbar ist und somit ein unauffälliges Erscheinungsbild zur Folge hat. In vorteilhafter Weise könnte die Entfeuchtungsvorrichtung in der Innenfensterbank integriert sein. Die Entfeuchtungsvorrichtung wäre somit besonders einfach bei Renovierungen nachrüstbar. In vorteilhafter Weise könnte die Entfeuchtungsvorrichtung eine maximale Bauhöhe von 30 mm bis 35 mm, in besonders bevorzugter Weise 32 mm oder 33 mm aufweisen.

Im Hinblick auf eine besonders funktionelle Ausgestaltung könnte das Luftführungselement mindestens zwei Strömungskanäle aufweisen, welche die Außenluftstelle mit einer Zuluftstelle und/oder die Abluftstelle mit einer Fortluftstelle verbinden. Die Außenluftstelle, die Zuluftstelle, die Abluftstelle und/oder Fortluftstelle sind in Strömungsverbindung mit entsprechenden Außenluftstellen, Zuluftstellen, Abluftstellen und/oder Fortluftstellen in der Fensterbank, welche einen Luftaustausch zwischen dem Raum und der Umwelt oder einen anderem Raum gewährleistet. Zur Sicherung der Luftqualität und zum Schutz der Luftführungselements vor Verschmutzungen könnten zudem entsprechende Filter an der Außenluftstelle, der Zuluftstelle, der Abluftstelle und/oder der Fortluftstelle vorgesehen sein.

In vorteilhafter Weise könnten die Luftbewegungselemente in den Anströmelement angeordnet sein, die in Strömungsverbindung mit den Strömungskanälen stehen, und/oder zumindest teilweise symmetrisch zur Hauptachse des Luftführungselements angeordnet sein. In weiter vorteilhafter Weise sind das oder die Luftbewegungselemente als Radialventilatoren ausgestaltet. In besonders vorteilhafter Weise könnte es sich um Ventilatoren handeln, mittels derer bei einer Antriebsspannung von im Wesentlichen 12 V eine Druckerhöhung von bis zu 400 Pa erreicht werden können, die eine Nenndrehzahl von 5100 U/min und einen Schallleistungspegel von 64 dB aufweisen. Die Strömungskanäle, die beispielsweise als Zuluftkanal und/oder als Fortluftkanal ausgestaltet sind, könnten im Wesentlichen symmetrisch zur Längshauptachse des Luftführungselements verlaufen, besonders bevorzugt könnten die Strömungskanäle beispielsweise mindestens die Hälfte der Länge des Luftführungselements parallel zur Hauptachse verlaufen. Hierdurch könnten Verwirbelungen und somit Druckverluste vermindert werden.

Zur weiteren Verminderungen von Verwirbelungen könnte mindestens ein Führungselement in einem Strömungskanal und/oder in einem Anströmelement eines der Luftbewegungselemente vorgesehen sein. In bevorzugter Weise könnten in jedem Strömungskanal mindestens ein Führungselement, beispielsweise vor der Zuführung der Luft zum Luftbewegungselement, das heißt im Zuluftkanal und/oder im Fortluftkanal, angeordnet sein. Das Führungselement könnte als Luftleitblech ausgestaltet sein, das sich über die Höhe des entsprechenden Strömungskanals erstreckt und/oder in der Draufsicht eine Krümmung aufweisen.

In einer bevorzugten Ausgestaltung könnte ein Luftbewegungselement der Außenluftstelle und/oder ein Luftbewegungselement der Abluftstelle derart betreibar sein, dass der Luftstrom zuluftseitig und/oder abluftseitig im Druckbetrieb beförderbar ist. Zwar könnte dies zu einer Erhöhung der Bautiefe führen, jedoch könnte der beförderte Luftvolumenstrom erhöht werden, ohne dass die Antriebspannung der Luftbewegungselemente erhöht werden müsste. In besonders bevorzugter Weise könnte bei einer Antriebsspannung des Luftbewegungselements von ca. 10V - 14 V ein Volumenstrom der Luft von 32 - 41 m³/h bei einem Druck von ca. 93 - 144 Pa auf der Zuluftseite und ein Volumenstrom von 32 - 42 m³/h bei einem Druck von 89 ― 135 Pa auf der Abluftseite einstellbar sein. In ganz bevorzugter Weise könnte bei einer Antriebspannung von im Wesentlichen 12 V des Luftbewegungselements ein Volumenstrom der Luft von mindestens 30 m³/h erzeugbar sein.

In vorteilhafter Weise könnte ein Wärmetauscher vorgesehen sein, mittels dessen ein Energieaustausch zwischen den in den mindestens zwei Strömungskanälen beförderten Luftströmen erfolgen könnte. In weiter vorteilhafter Weise könnte der Wärmetauscher als Plattenwärme-übertrager, der im Wesentlichen als Gleichströmer arbeitet, ausgestaltet sein, jedoch auch eine Kreuzstromkomponente enthalten kann. Somit könnte eine effektive Wärmerückgewinnung aus der Raumluft erfolgen, wodurch eine besondere Energieeffizienz gewährleistet wird.

Hinsichtlich einer besonders effektiven Feuchteregulierung könnte mindestens ein Sensor zur Messung der Luftfeuchtigkeit vorgesehen ist, wobei der Sensor vorzugsweise als Signalgeber zur automatisierten Regelung der Luftfeuchtigkeit dienen könnte, beispielsweise um den Betrieb und/oder Leistung der Luftbewegungselemente zu regeln. Die Luftfeuchtigkeit könnte so automatisch erfasst und zur Feuchteregulierung im Raum verwendet werden. Somit könnte eine Feuchteregulierung der Raumluft ohne subjektiven Einfluss erfolgen und somit eine Verringerung bis Vermeidung von Schimmelbildung, die beispielsweise durch eine zu hohe Luftfeuchtigkeit, Kondenswasser z.B. an den Fensterlaibungen bedingt sein könnte. Des Weiteren könnten mindestens ein Temperatursensor und/oder Differenzdruckwächter vorgesehen sein, mittels derer die Regelung der Entfeuchtungsvorrichtung optimiert werden könnte.

Die Erfindung betrifft ferner ein Fenstersystem mit einer obig beschriebenen Entfeuchtungsvorrichtung mit einem Rahmensystem zur Aufnahme der Scheibe und mindestens einer Fensterbank, wobei die Fensterbank einen Hohlraum aufweist. In erfindungsgemäßer Weise ist das Lüf tungselement in dem Hohlraum integriert und fungiert die Fensterbank als Gehäuse des Lüf tungselements. Somit wäre ein Entlüftungssystem in das Fenster integriert und könnte bei Renovierungen besonders einfach und ohne zusätzliche, über den Austausch des Fensters hinausgehende Veränderung der Bausubstanz verwendet werden. Es wäre somit eine besonders einfache Nachrüstbarkeit gewährleistet. Ferner wäre durch ein derartiges Fenstersystem eine kontinuierliche Entfeuchtung des Raumes zur Verminderung und vorzugsweise Vermeidung von Schimmelbildung möglich, da feuchte Luft aus dem Raum transportiert und durch weniger feuchte Luft ersetzt wird. Weitere Vorteile ergeben sich aus dem zu der Entfeuchtungsvorrichtung Gesagtem.

In weiter vorteilhafter Weise könnte der Hohlraum in der Innenfensterbank vorgesehen sein. Dies würde einen besonders guten Wärmeaustausch gewährleisten, da die Entfeuchtungsvorrichtung nicht auf die Außentemperatur gekühlt oder erwärmt wird. Ferner könnte dann die Entfeuchtungsvorrichtung besonders einfach gewartet werden. Die Wartung könnte zudem durch das Vorsehen einer Revisionsöffnung und einer zugehörigen Revisionsklappe erleichtert werden. Des Weiteren könnte eine Bedienkonsole vorgesehen sein, mittels derer beispielsweise eine manuelle Steuerung der Entlüftungsvorrichtung vorgenommen werden kann.

Im Hinblick auf eine besonders einfache Montage könnten im Hohlraum und/oder am Lüftungselement Führungsschienen vorgesehen sein, so dass das Lüftungselement in den Hohlraum einschiebbar ist.

Es gibt nun verschiedenen Möglichkeiten, die Lehre der vorliegenden Erfindung in vorteilhafter Weise auszugestalten und weiterzubilden. Dazu ist einerseits auf den Patentansprüchen 1 und 8 nachgeordneten Patentansprüche und anderseits auf die nachfolgende Erläuterung eines bevorzugten Ausführungsbeispiels einer erfindungsgemäßen Entfeuchtungsvorrichtung und eines entsprechenden erfindungsgemäßen Fenstersystems anhand der Zeichnung zu verweisen. In Verbindung mit dieser Erläuterung des bevorzugten Ausführungsbeispiels anhand der Zeichnung werden auch im Allgemeinen bevorzugte Ausgestaltungen und Weiterbildungen der Lehre erläutert. In der Zeichnung zeigen
- Fig. 1: in einer schematischen, perspektivischen Darstellung, ein Attsführungsbeispiel einer erfindungsgemäßen Entfeuchtungsvorrichtung,
- Fig. 2: in einer schematischen Draufsicht, das Ausführungsbeispiel der Fig. 1,
- Fig. 3: in einer schematischen Draufsicht, das Ausführungsbeispiel der Fig. 1 mit dem Strömungsverlauf der Luft im Betrieb,
- Fig. 4: in einer schematischen Darstellung, ein weiteres Ausführungsbeispiel einer erfindungsgemäßen Entfeuchtungsvorrichtung und
- Fig. 5: in einem schematischen Teilschnitt, die Anordnung eines Luftbewegungselements in einer Fensterbank.

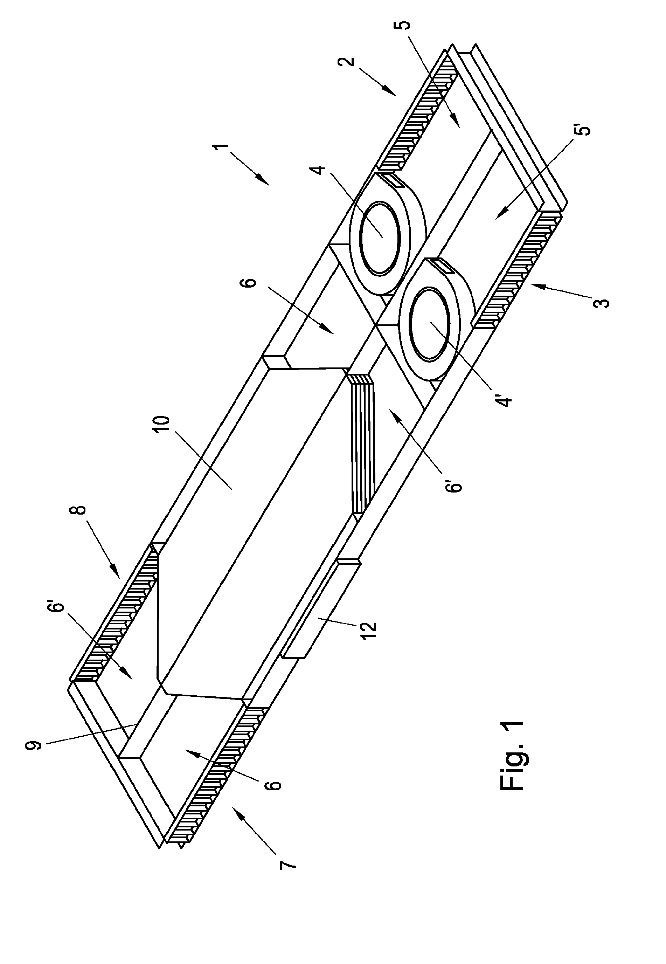

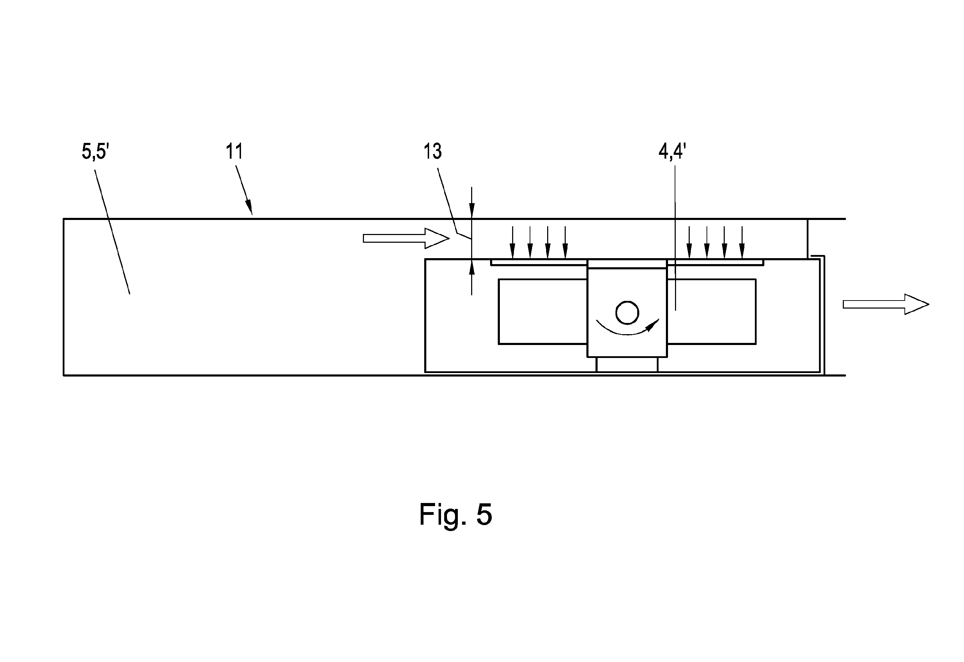

Fig. 1 zeigt ein Ausführungsbeispiel einer Entfeuchtungsvorrichtung zur Verringerung des Feuchtigkeitsgehalts der Luft in einem Raum zur Verwendung mit einem Fenster. Die Entfeuchtung umfasst ein Luftführungselement 1, das eine Außenluft- 2 und eine Abluftstelle 3 und zwei Luftbewegungselemente aufweist, die als Radialventilatoren 4, 4' ausgestaltet sind. Ein Ventilator 4 ist hierbei der Außenluftstelle 2 und ein Ventilator 4' der Abluftstelle 3 zugeordnet ist. Den Ventilatoren 4, 4' ist jeweils ein Anströmelement 5, 5' zugeordnet, mittels dessen die Luft den Ventilatoren 4, 4' zuführbar ist, und die in diesem Ausführungsbeispiel als Zugangsströmungskanäle ausgestaltet sind, die bezüglich der Fig. 5 näher beschrieben werden. Beide Ventilatoren 4, 4' werden im Druckbetrieb betrieben. Die Grundmaße des Lüftungselements 1 betragen in diesem Ausführungsbeispiel in der Breite 1000 mm, in der Höhe 33 mm und in der Tiefe 270 mm.

In erfindungsgemäßer Weise ist das Luftführungselement 1 in eine ― nicht gezeigt ― Fensterbank 11 integrierbar ist, wobei die Fensterbank 11 zumindest eine Außenluft- und eine Abluftstelle aufweist, die mit der Außenluft- 2 und der Abluftstelle 3 des Luftführungselements 1 im Betrieb in Strömungsverbindung steht.

Zudem sind zwei Strömungskanäle 6, 6' vorgesehen, welche die Außenluftstelle 2 mit einer Zuluftstelle 7 und die Abluftstelle 3 mit einer Fortluftstelle 8 verbinden. Diese Strömungskanälen 6, 6' stehen in Strömungsverbindung mit den Ventilatoren 4, 4' und den Anströmelementen 5, 5', wobei sie symmetrisch zur Hauptachse 9 des Luftführungselements 1 angeordnet sind.

Des Weiteren ist ein ― nicht dargestellter ― Sensor vorgesehen, der die Luftfeuchtigkeit im Raum, das heißt auf der Seite der Abluft- 3 und Zuluftstelle 7 misst und der als Signalgeber dient, um die Luftfeuchtigkeit im Raum automatisiert zu regeln. Zur manuellen Einstellung und zur Überwachung des Betriebs ist eine Bedieneinheit 12 vorgesehen.

Zur Rückgewinnung der Wärme der Raumluft ist ein Wärmetauscher 11 vorgesehen ist, mittels dessen ein Energieaustausch zwischen den in den zwei Strömungskanälen 6, 6' beförderten Luftströmen erfolgt.

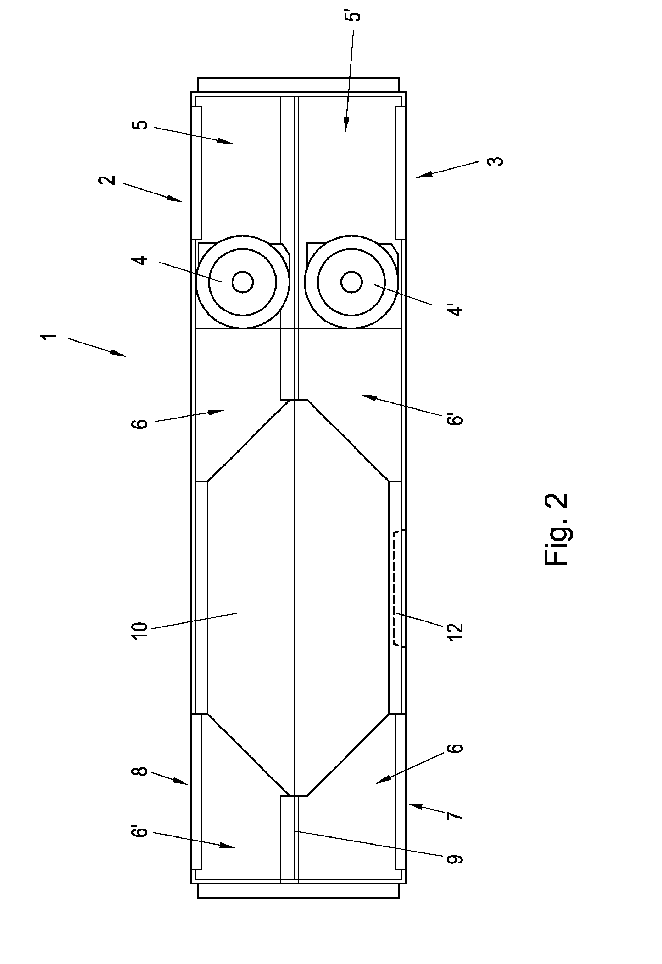

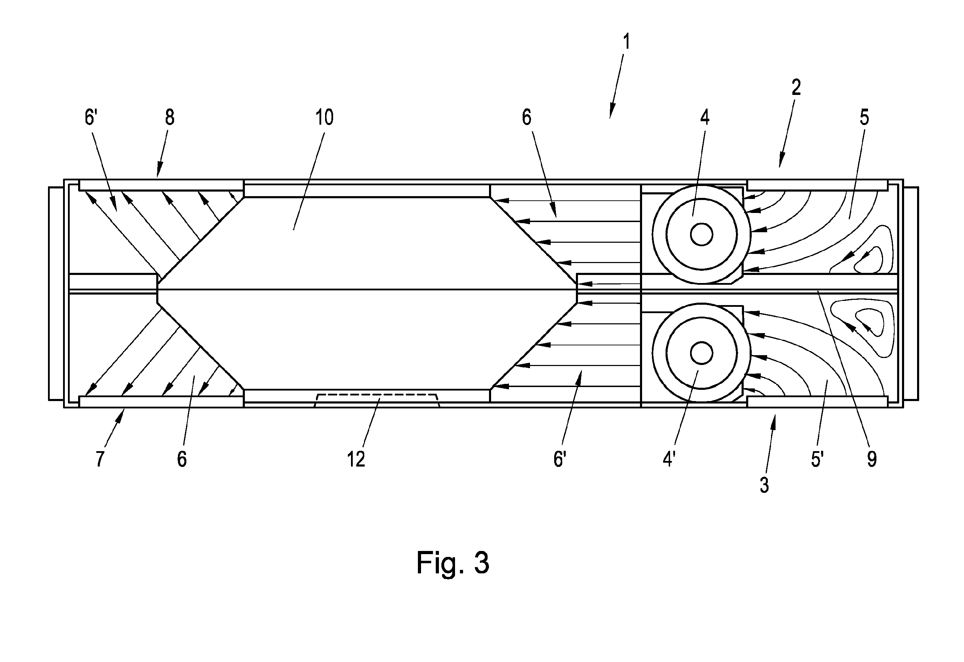

Fig. 2 und Fig. 3 zeigt das Ausführungsbeispiel der Fig. 1 jeweils in einer schematischen Drauf sicht, wobei in Fig. 3 der Strömungsverlauf der Luft nebst Verwirbelungen in den Anströmelementen 5, 5' gezeigt ist.

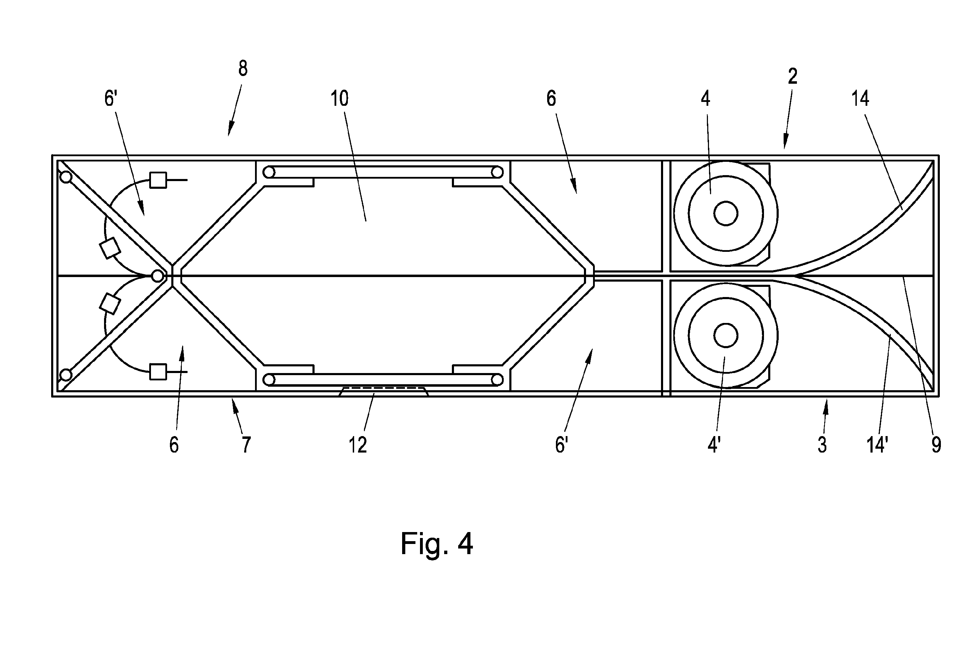

Fig. 4 zeigt ein weiteres Ausführungsbeispiel einer erfindungsgemäßen Entfeuchtungsvorrichtung. Grundsätzlich entspricht das Luftführungselement 1 dem ersten Ausführungsbeispiel, so dass gleiche Teile mit gleichen Bezugzeichen bezeichnet sind und zur Vermeidung von Wiederholungen auf die Beschreibung zu diesen Figuren verwiesen wird. Zusätzlich umfasst das Luftführungselement 1 zwei als Luftleitbleche 10, 10' ausgestaltete Führungselemente in den Anströmelementen 5, 5', um die in Fig. 3 gezeigten Verwirbelung der Luft in den Anströmelementen 5, 5' zu vermindern.

Die erfindungsgemäße Entlüftungsvorrichtung ist in ein nicht gezeigtes Fenstersystem integrierbar, das ein Rahmensystem zur Aufnahme des Fensters und einer Fensterbank 11 aufweist, welche aus Kunststoff gefertigt ist und einen Hohlraum aufweist. In erfindungsgemäßer Weise dient die Fensterbank als Gehäuse des Lüftungselements 1. Ein solches in der Innenfensterbank 11 integriertes Luftführungselement 1 ist ausschnittsweise in Fig. 5 gezeigt. Das Anströmelement 5, 5' wird demnach durch die Ober- und Unterseite der Fensterbank gebildet und weist zwei Zonen auf Die erste Zone ist die Zone, welche zu erst von der Luft durchströmt wird und welche im Wesentlichen so hoch wie das Luftführungselement 1 bzw. die Innenfensterbank 11 ist. Die zweite Zone ist ein sogenannter Ringspalt 13, der von der Oberseite der Innenfensterband 11 und der Oberseite des Ventilators 4, 4' gebildet wird. Im vorliegenden Ausführungsbeispiel, das heißt bei einer Bauhöhe von 33 mm, beträgt der Ringspalt 13 8 mm. Somit wird bei einer Antriebsspannung der Ventilatoren 4, 4' von 10V ein Volumenstrom von 34 m³/h in der Zuluft-und Abluftseite erreicht. In wiederum erfindungsgemäßer Weise ist erkannt worden, dass die Bauhöhe des Luftführungselements 1 und die Höhe des Ringspalts 13 einen besonderen Einfluss auf die Volumenströme hat. In vorteilhafter Weise sollte die Höhe des Ringspalts 13 zwischen 20% bis 30% der Gesamtbauhöhe, bevorzugt 25% der Gesamtbauhöhe betragen.

Hinsichtlich weiterer Details wird zur Vermeidung von Wiederholungen auf die allgemeine Beschreibung verwiesen.

Schließlich sei darauf hingewiesen, dass das voranstehende Ausführungsbeispiel lediglich zur Erläuterung der beanspruchten Lehre dient, diese jedoch nicht auf das Ausführungsbeispiel einschränkt.

## Patentansprüche

1. Entfeuchtungsvorrichtung zur Verringerung des Feuchtigkeitsgehalts der Luft in einem Raum zur Verwendung mit einem Fenster, mit einem Luftführungselement, wobei das Luftführungselement (1) mindestens eine Außenluft- (2) und eine Abluftstelle (3) und mindestens ein Luftbewegungselement (4, 4') umfasst, wobei ein Luftbewegungselement (4) der Außenluftstelle (2) und/oder ein Luftbewegungselement (4') der Abluftstelle (3) zugeordnet ist und wobei den Luftbewegungselementen (4, 4') jeweils ein Anströmelement (5, 5') zugeordnet ist, mittels dessen die Luft dem Luftbewegungselement (4, 4') zuführbar ist, **dadurch gekennzeichnet, dass** das Luftführungselement (1) in eine Fensterbank (11) integrierbar ist und dass die Fensterbank (11) zumindest eine Außenluft- und eine Abluftstelle aufweist, die mit der Außenluft- (2) und der Abluftstelle (3) des Luftführungselements (1) im Betrieb in Strömungsverbindung ist.

2. Entfeuchtungsvorrichtung nach Anspruch 1, **dadurch gekennzeichnet, dass** das Luftführungselement (1) mindestens zwei Strömungskanäle (6, 6') aufweist, welche die Außenluftstelle (2) mit einer Zuluftstelle (7) und/oder die Abluftstelle (3) mit einer Fortluftstelle (8) verbinden.

3. Entfeuchtungsvorrichtung nach Anspruch 1 oder 2, **dadurch gekennzeichnet, dass** die Luftbewegungselemente (4, 4') in den Anströmelement (5, 5') angeordnet sind, die in Strömungsverbindung mit den Strömungskanälen (6, 6') stehen, und/oder zumindest teilweise symmetrisch zur Hauptachse (9) des Luftführungselements (1) angeordnet sind.

4. Entfeuchtungsvorrichtung nach Anspruch 2 oder 3 , **dadurch gekennzeichnet, dass** mindestens ein Führungselement (10, 10') in einem Strömungskanal (6, 6') und/oder in einem Anströmelement (5, 5') eines der Luftbewegungselement (4, 4') vorgesehen ist.

5. Entfeuchtungsvorrichtung nach einem der Ansprüche 1 bis 4, **dadurch gekennzeichnet, dass** ein Luftbewegungselement (4) der Außenluftstelle (2) und/oder ein Luftbewegungselement (4') der Abluftstelle (3) derart betreibar ist, dass der Luftstrom zuluftseitig und/oder abluftseitig im Druckbetrieb beförderbar ist.

6. Entfeuchtungsvorrichtung nach einem der Ansprüche 1 bis 5, **dadurch gekennzeichnet, dass** ein Wärmetauscher (10) vorgesehen ist, mittels dessen ein Energieaustausch zwischen den in den mindestens zwei Strömungskanälen (6, 6') beförderten Luftströmen erfolgt.

7. Entfeuchtungsvorrichtung nach einem der Ansprüche 1 bis 6, **dadurch gekennzeichnet, dass** ein Sensor zur Messung der Luftfeuchtigkeit vorgesehen ist, wobei der Sensor vorzugsweise als Signalgeber zur automatisierten Regelung der Luftfeuchtigkeit dient.

8. Fenstersystem mit einer Entfeuchtungsvorrichtung nach einem der Ansprüche 1 bis 7 mit einem Rahmensystem zur Aufnahme des Fensters und mindestens einer Fensterbank (11), wobei die Fensterbank (11) einen Hohlraum aufweist, **dadurch gekennzeichnet, dass** das Luftführungselement (1) in dem Hohlraum integriert ist und die Fensterbank als Gehäuse des Luftführungselements (1) fungiert.

9. Fenstersystem nach Anspruch 8, **dadurch gekennzeichnet, dass** der Hohlraum in der Innenfensterbank vorgesehen ist.

10. Fenstersystem nach Anspruch 8 oder 9, **dadurch gekennzeichnet, dass** im Hohlraum und/oder am Luftführungselement (1) Führungsschienen vorgesehen sind, so dass das Lüf tungselement (1) in den Hohlraum einschiebbar ist.
